# EUROPEAN PATENT SPECIFICATION

(11) **EP 1 570 916 B1**
(45) Date of publication and mention of the grant of the patent: **05.12.2007**
(21) Application number: 04005301.9
(22) Date of filing: 05.03.2004
(51) Int. Cl.: B05D 5/08, D06N 3/00, C04B 41/48, C04B 41/47, C04B 41/50

(54) **Long-term general-purpose water repellant**
Langzeitwirkendes, allgemein einsetzbares wasserabweisendes Mittel
Composition hydrofuge à usage général et de longue durée

(43) Date of publication of application: 07.09.2005
(73) Proprietor: ECO-COSMO CO., LTD., Kohoku-ku Yokohama Kanagawa (JP)
(72) Inventor: Koyanagi, Yasuhiro, Tokyo (JP)
(74) Representative: Albrecht, Thomas

(56) References cited:
- GB-A- 2 151 034
- US-A- 4 594 286
- PATENT ABSTRACTS OF JAPAN vol. 2002, no. 06, 4 June 2002 (2002-06-04) & JP 2002 060251 A (NIPPON ELECTRIC GLASS CO LTD), 26 February 2002 (2002-02-26)

## Description

### Field of the Invention:

This invention relates to a water repellant and more particularly to a novel water repellant which forces no fastidious choice of a substrate (base material) and retains the properties of durability and weatherability for a long time.

### Description of the Related Art

The water repellant which confers water repellency on the coating film applied to the surface of a substrate of concrete or wood and improves the substrate in weatherability has been finding extensive utility mainly in the fields of building construction and building materials. It is mainly known in the form of a fluorine type coating material. "Patent Document 1," for example, suggests a method which effects prime coating as with an epoxy resin coating material or a phenol/alkyd resin coating material and finish coating as with a coating material having as a main component thereof a fluorine type copolymer possessing such a hardening reaction site as hydroxybutyl vinyl ether or glycin vinyl ether.

"Patent Document 2" discloses a water- and oil-repellent coating material for use on a cement type concrete composed with a specific fluorine-containing silane compound.

Further, "Patent Document 3" discloses a technique for applying to a cement type substrate a coating material having as main components thereof a fluoro-olefin copolymer possessing a hydroxyl group or a carboxyl group and a specific silane compound.

"Patent Document 1": JP-B-SHO 62-16141

"Patent Document 2": JP-A-HEI 2-107583

"Patent Document": JP-A-HEI 5-200353

According to the method of the invention of "Patent Document 1," though the fluorine type copolymer is endowed with durability proper for a coating material grade resin, this durability has only a short life and does not deserve the modifier "satisfactory" in terms of the long-term durability.

Even the coating material of "Patent Document 1" is such that it cannot retain high water repellency for a long time and cannot help imposing a limit on durability.

Further, the technique of "Patent Document 3," which is capable of conferring high durability on the cement type substrate, has never been awarded any contrivance regarding retention and enhancement of water repellency.

Furthermore, US 4,594,286 discloses a coated fabric which is tear resistant, abrasion resistant, water repellant and flame retardant formed of a substrate woven from yarns of synthetic fibers, a liquid coating containing flame retardant chemicals, a polymeric binder and a thermosetting blocked urethane prepolymer applied to the woven substrate and cured by heat, whereby the thermoset coating is tightly adhered to the woven fabric. The polymeric binder may include polyvinyl acetate. The flame retardant, water-proof fabric disclosed in US 4,594,286 is useful for tenting, tarpaulins and protective clothing.

### SUMMARY OF THE INVENTION

This invention has for a task thereof the provision of a novel water repellant which forces no fastidious selection of a substrate to be used, possesses lasting water repellency and weatherability, avoids emitting a harmful substance, and promises an effective measure to cope with the acid precipitation caused by the recent years' aggravation of the terrestrial environment.

The present inventor, after pursuing a study in search of a way of formulating a water-repelling agent with a substance capable of taking the place of the water-repellant using the fluorine type resin observed in the prior art mentioned above, has come to take notice of zirconium oxide possessing high durability as a solid state property and arresting attention as an ultraviolet absorbent and a polyvinyl acetate resin used as an emulsion in a water paint and adhesive agent and has consequently acquired a knowledge that by mixing these compounds with paraffin, it is made possible to obtain a water repellant which is endowed with excellent water repellency in combination with long-term durability and resistance to acids. This invention has been perfected on the basis of this knowledge.

This invention which has achieved the task is directed toward a long-term general-purpose water repellant characterized by having three main ingredients, i.e. an emulsion of zirconium oxide, liquid paraffin, and an emulsion of polyvinyl acetate resin sequentially at a ratio of 1 : 4 : 1 ± 20 % on each ingredient.

The water repellant of this invention forces no fastidious selection of a substrate to be used and enables a selected substrate to acquire water repellency, lasting weatherability, and resistance to acids. When it is applied to wood, it enables the wood to retain water repellency at no sacrifice of its inherent ability to absorb and release moisture. Further, since it emits no harmful substance, it can provide a water repellant which is safe to the human body.

### BRIEF DESCRIPTION OF THE DRAWINGS

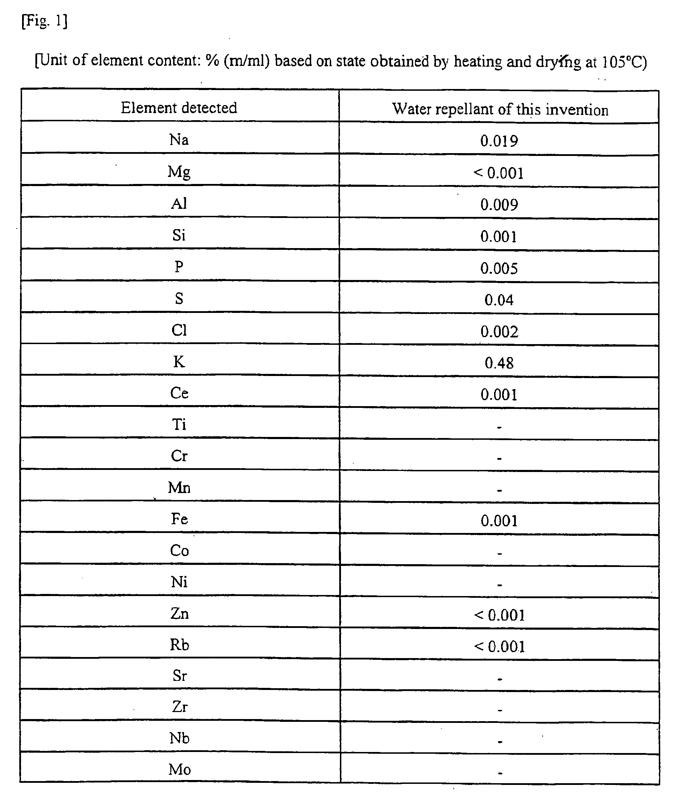

Fig. 1 is a table showing the results of a qualitative analysis performed on the water repellant of this invention.
Fig. 2 is a diagram showing a fluorescent X-ray spectrum obtained as a result of the qualitative analysis of the water repellant of this invention.
Fig. 3 is a table showing the results of an analytical test performed on the water repellant of this invention to determine the presence or absence of a harmful substance therein.
Fig. 4 is a table showing the properties of weatherability and angle of contact with water exhibited by the water repellant of this invention after an exposure test.

### DETAILED DESCRIPTION OF THE PREFERRED EMBODIMENT

For the purpose of enabling a substrate to derive the properties of water repellency and durability most efficiently from the use of the water repellant of this invention, it is most appropriate to fix the mixing ratio of the three ingredients, ie an emulsion of zirconium oxide, liquid paraffin, and an emulsion of polyvinyl acetate resin, at 1 : 4 : 1. This ratio has been singled out empirically.

Even at a ratio which approximates the mixing ratio mentioned above, the effect of this invention can be materialized satisfactorily. To be specific, the approximation contemplated herein relative to the mixing ratio whose optimum standard value is fixed at 1 : 4 : 1 is such that the numerical values of the individual proportions of the mixing ratio of the three ingredients are each allowed to increase or decrease within the limit of 20 percents.

When the water repellant of this invention is dried at 105°Cfor five hours and further ignited and incinerated at 700°C for two hours and the produced ash is subjected to fluorescent X-ray analysis, it is found to contain at least 0.005 - 0.03% of sodium (Na), 0.003 - 0.015% of aluminum (Al), 0.001 - 0.010% of phosphorus (P), 0.01 - 0.10% of sulfur (S), and 0.20 - 0.80% of potassium (K). In these element contents, the water repellant of this invention is preferred to contain Na in the range of 0.015 - 0.025%, Al in the range of 0.006 - 0.012%, P in the range of 0.003 - 0.007%, S in the range of 0.02 - 0.06%, and K in the range of 0.45 - 0.55%.

Further, the water repellant of this invention contains magnesium (Mg), silicon (Si), chlorine (Cl), calcium (Ca), iron (F), zinc (Zn), and rubidium (Rb) in a minute amount besides the elements mentioned above. The term "minute amount" as used herein means a numerical value very close to the limit of detection, specifically falling in the range of 0.001% - 0.002%.

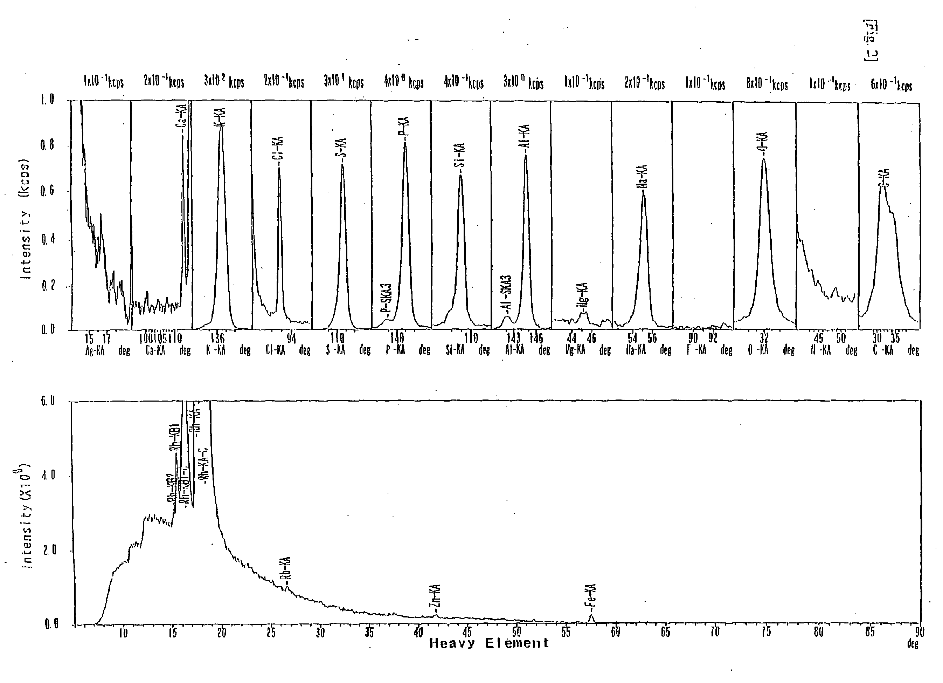

Incidentally, these numerical values have been obtained by qualitatively analyzing relevant elements having atomic numbers of not less than 6 (carbon) by using the fundamental parameter method (FP). The "FP" method is a means to calculate contents aimed at by effecting comparison of analyses obtained with pertinent fluorescent X-ray intensities and then performing convergence of the results of this comparison by using such physical constants as mass absorption coefficients and spectral distribution curves of an X-ray source. Table 1 shows in a tabulated form the typical numerical values found of the water repellant of this invention, with the mixing ratio of the component ingredients fixed at the optimum value of 1 : 4 : 1. In this case, the calculation was carried out by assuming the hydrogen content to be 0% because the fluorescent X-ray analysis was unable to analyze hydrogen and the quantitative analyses of carbon and oxygen were left unindicated because a liquid sample used for the analysis had undergone a treatment of calcination. Fig. 2 illustrates the fluorescent X-ray spectrum involved in the calculation.

Next, one example of the method for the production of the water repellant contemplated by this invention will be described below. First, in a room of normal temperature, 1 kg of liquid zirconium oxide (made by Goou Kagaku Kogyo K.K. and sold under the trademark designation of "Digest T90") and 4 kg of liquid paraffin (made by Toho Kagaku K.K. and sold under the trademark designation of "Parax 40K") are placed in a reaction column and stirred therein with a propeller stirrer for a period in the approximate range of 5 minutes - 15 minutes. Subsequently, the resultant mixture and 1 kg of liquid polyvinyl acetate resin (made by Showa Kobunshi Resol K.K. and sold under the product code of "AP50") are added together and stirred for a period similarly in the approximate range of 5 minutes - 15 minutes till they are thoroughly mixed. Consequently, the water repellant contemplated by this invention is easily obtained.

The water repellant of this invention is applicable to a wide variety of substrates. When the substrate is concrete, mortar, or stone, for example, when the water repellant is applied to the surface of such a substrate, it is capable of exalting the durability of a building structure made of the substrate as by preventing water from permeating the substrate and precluding the reinforcing steel used in the substrate from gathering rust. When the substrate happens to be a plywood, the water repellant is capable of preventing the plywood from succumbing to separation into component layers and yielding to deterioration of quality as a wood material. It is also appropriate for building materials. Particularly when it is applied to sashes, panes of window glass, and rain water gutters in the district experiencing heavy snowfalls and effects of cold latitudes, it prevents the windows from freezing and gathering piles of snow and precludes occurrence of icicles hanging from the gutters. It is further applicable to telephone lines and power transmission lines. When it is applied to these lines, it prevents them from being burdened with piling snow, being frozen with very cold air, or aiding growth of icicles and consequently prevents them from breaking. It is also applicable to packaging materials. When it is applied to the inner sides of a corrugated cardboard box, for example, it can prevent a commodity held in the box from being damaged by frozen dew. Further, this water repellant, on account of its freedom from odor, is applicable to packing materials and transporting materials used for such foodstuffs as vegetables which abhor odor.

The water repellant of this invention greatly excels in workability because it has only to be applied in its unmodified form to a substrate without requiring addition of a solvent. When the substrate is made of a porous substance, this water repellant permeates this substrate to the core because it is soluble in water. Even if the coating film covering the surface of the substrate happens to be damaged, the water repellant applied thereto will not have the effect thereof seriously impaired. The water repellant permits free selection of the color of the coating film owing to its another advantage of allowing incorporation of a coloring agent therein. Further, the coating film formed of the water repellant of this invention may be overcoated with another coating material.

The formation of the coating film with the water repellant of this invention can be effected by any of the ordinary techniques in popular use such as brushing, gun blowing, spraying, and roller coating. The drying time of the applied coating film is so short as to fall in the range of 15 minutes - 30 minutes in the environment of 20°C. The thickness of the coating film to be formed on the substrate is proper in the approximate range of 10 µ - 50 µ, though variable with the kind of the substrate to be used. If this thickness falls short of 10 µ, the shortage will result in preventing the formed coating layer from acquiring sufficient water repellency and durability. If the thickness exceeds 50 µ, the excess will possibly induce the applied coating film to gather wrinkles and suffer from impaired durability.

### EXAMPLES

### [Example 1]

### [Evaluation of retention of water drops]

The water repellant of this invention was applied in a thickness of 30 µ to a glass plate and dried to obtain a sample. This sample was erected at right angles and sprayed for one hour on the entire surface thereof with the water from a nozzle held at a distance of 20 cm. Then, the water drops remaining on the sample surface were visually observed and rated. The rating was made on a four-point scale, wherein A stands for total absence of water drop from the sample surface, B for slight presence of water drops on the sample surface, C for notable persistence of water drops on the sample surface, and D for full spread of water drops on the sample surface. The sample coated with the water repellant of this invention was rated as B.

### [Example 2]

### [Evaluation of water contact]

The water repellant of this invention was applied in a thickness of 30 µ on glass plates and cardboards each measuring 4 cm × 4 cm and the applied layers of the water repellant were dried for 24 hours to prepare three samples each of the two kinds of substrate. Water was dropped onto the coated surfaces of the samples. The angles of contact of the water drops to the surfaces were measured with a contact angle meter. Consequently, the angles of contact on the glass plate samples averaged 102.3 and that on the cardboard samples averaged 102.7.

### [Example 3]

### [Evaluation of resistance to acid]

The water repellant of this invention was applied in a thickness of 30 µ to both sides of a steel sheet measuring 150 mm × 70 mm × 0.8 mm in surface area to obtain a sample. The sample was kept immersed in a deionized aqueous 5% sulfuric acid solution for 24 hours in an atmosphere kept at a room temperature of 22°C and then dried. When the surface appearance of the sample was visually observed, no change was detected.

### [Example 4]

### [Evaluation of weatherability in natural state]

The water repellant of this invention was applied in a thickness of 30 µ to one side of a plywood measuring 9 mm in thickness to prepare a sample. The sample was pasted, with the coated surface thereof kept on the outer side, to the front side and the opposite lateral sides of the upright wall of a sink installed outdoors and exposed to the ambient air on rainy days and sunny days alike for three years. When the sample was visually observed, no change was found in the surface appearance. When it was sprayed with water, the coated surface of the sample showed only slight retention of water drops, indicating that the sample was still retaining a water-repelling property. Ordinarily, if the cardboard itself was kept exposed to rain, it would sufferpartial loss of power of adhesion and partial separation of component sheets. The sample showed absolutely no discernible sign of separation on the coated side, indicating that the state of good adhesion obtained at first was still retained.

### [Example 5]

### [Evaluation of ability to absorb and release moisture]

The water repellant of this invention was spread on a board of Japanese cedar measuring 251 mm × 251 mm × 27.2 mm to prepare a sample. This sample was tested for ability to absorb and release moisture. The test was based on JIS (Japanese Industrial Standards) A 1470-1 (Method for testing moisture-conditioned building material for ability to absorb and release moisture - Part 1: Temperature-responding method - Test for absorption and release of moisture due to change of temperature). As regards the testing conditions, the sample was cured for 24 hours in an atmosphere of intermediate humidity region at a temperature of 23°C and a humidity of 53%, then placed in a hygroscopic process at a temperature of 23°C and a humidity of 75% for 24 hours as the first step, and placed in a humidity-releasing process at a temperature of 23°C and a humidity of 53% at the second step. The results show that the amount of moisture absorbed was 24.1 g/m², the amount of moisture released was 9.0 g/m², and the difference between the amounts of moisture absorbed and released was 15.1 g/m². Ordinarily, when a water repellant or a coating material is applied to a wood board, the ability to absorb and release moisture which is proper to wood is obstructed. The results of the test, however, show that when the water repellant of this invention is applied, the ability of wood to absorb and release moisture is sufficiently retained.

### [Example 6]

### [Evaluation of presence and absence of harmful substance]

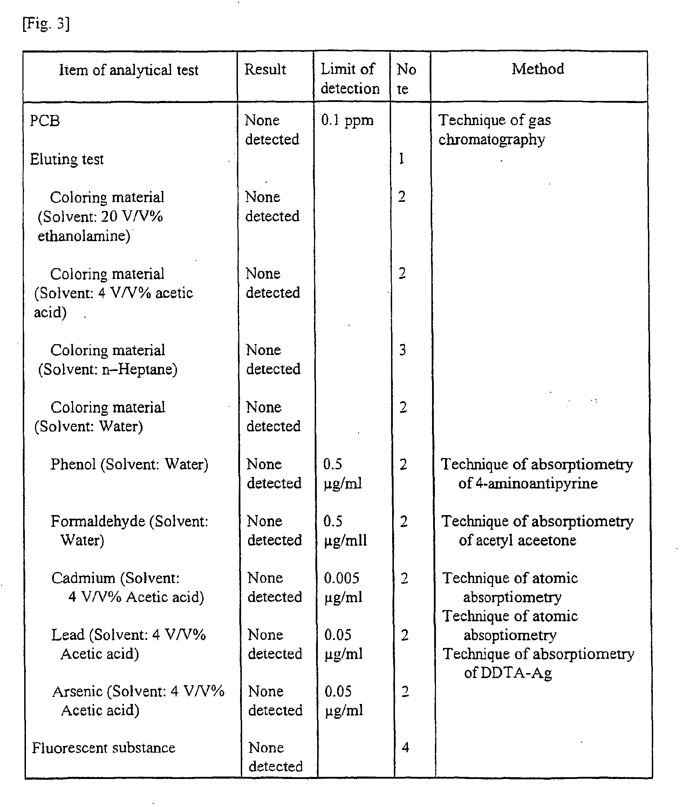

Japan Food Analysis Center, a foundation, was entrusted with the task of testing the water repellant of this invention with respect to the items of analytical test indicated in the lefthand column of the table of Fig. 3. The results indicate as shown in the table that such harmful substances as PCB, formaldehyde, cadmium, and arsenic were not detected at all. The contents of the remarks given in the table were as shown below.

Note 1: The test was performed on a specimen which was spread in a thickness of about 0.1 mm on a glass plate and then left standing at rest for three days at normal room temperature.

Note 2: The specimen deposited on the glass plate was eluted at 60°C for 30 minutes with 2 ml of a solvent per 1 cm² of the coated surface. The eluate consequently obtained was filtered through a membrane filter (0.5 µ) and then put to test.

Note 3: The elution was carried out by using 2 ml of the solvent per 1 cm² of the coated surface at 25°C for one hour.

Note 4: As regards the method for the inspection of devices or containers and packages which had used a fluorescent substance, the test was performed by following the process indicated in "Environment and Foodstuff No. 244, 1971" with necessary modifications. The test was carried out on the specimen which had been spread in a thickness of 0.1 mm on a glass plate and then left standing at rest at normal room temperature for three days.

### [Example 7]

### [Evaluation of weatherability and angle of contact of water after exposure test]

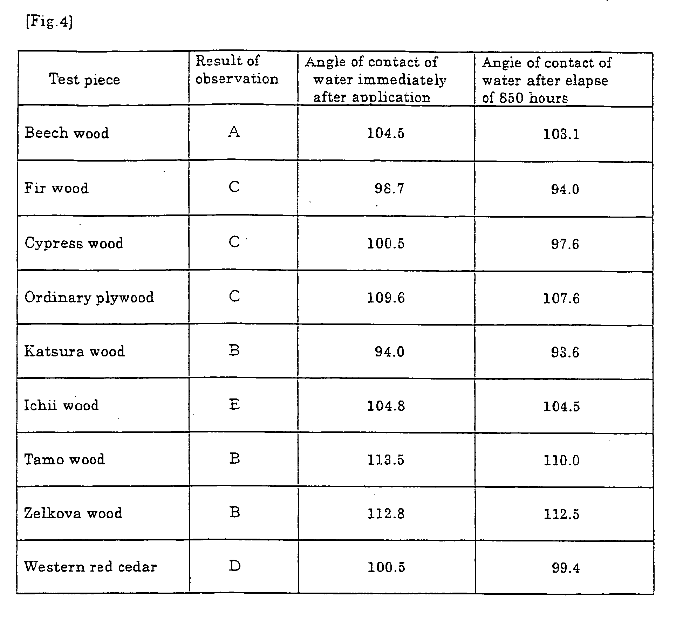

The test piece obtained by spreading the water repellant of this invention in a thickness of 30 µ on one side of a varying test piece indicated in the table of Fig. 4 (obtained by cutting from a board made by a proper forming method) and then drying the applied layer of the water repellant was tested for 850 hours based on the WS-A specified in Paragraph 6.3 of JIS (Japanese Industrial Standards) A 1415 (Method for exposure test with the light source for a laboratory on polymer type building material). Then, the surface of the test piece was evaluated to determine the weatherability and the angle of contact of water. The radiant flux density to one side of the test piece was 255 ± (10%) W/m² and the cycle of water spray was 102 minutes of radiation and 18 minutes of radiation and water spray. The results are shown in the table of Fig. 4. The results of the visual observation of the test piece after the test for weatherability were rated on the five point scale, wherein A stands for no sign of a crack but a discernible sign of only slight blushing, B for no sign of a crack but a discernible sign of partial blushing, C for no sign of a crack but a discernible sign of a partial change of color to brown, D for no sign of a crack but a discernible sign of a marked change of color, and E for no sign of a crack but a discernible sign of a partial blushing. The rating of the angle of contact of water was performed at five sites of a given test piece and the average of the five marks obtained was compared with the result of the measurement performed immediately after the application.

## Claims

1. A long-term general-purpose water repellant, **characterized by** having three main ingredients, ie an emulsion of zirconium oxide, a liquid paraffin, and an emulsion of polyvinyl acetate resin, mixed sequentially at a ratio of 1 : 4 : 1 ± 20% on each ingredient.

2. A long-term general-purpose water repellant according to claim 1, which, on being subjected to the fluorescent X-ray analysis in a state dried and then calcined, is found to contain 0.005 - 0.030% of sodium, 0.003 - 0.015% of aluminum, 0.001 - 0.010% of phosphorus, 0.01 - 0.10% of sulfur, and 0.20 - 0.80% of potassium.

3. A long-term general-purpose of water repellant according to claim 2, which further comprises magnesium, silicon, chlorine, calcium, iron, zinc, and rubidium.

## Patentansprüche

1. Langzeitwirkendes, allgemein einsetzbares wasserabweisendes Mittel, **dadurch gekennzeichnet, dass** es drei Hauptbestandteile, nämlich eine Emulsion von Zirkoniumoxid, ein flüssiges Paraffin und eine Emulsion eines Polyvinylacetatharzes, sequenziell gemischt bei einem Verhältnis von 1:4:1±20% für jeden Bestandteil, aufweist.

2. Langzeitwirkendes, allgemein einsetzbares wasserabweisendes Mittel gemäß Anspruch 1, von dem man findet, dass es, wenn es der Röntgenfluoreszenzanalyse in einem getrockneten und dann calcinierten Zustand unterzogen wird, 0,005-0,030% Natrium, 0,003-0,015% Aluminium, 0,001-0,010% Phosphor, 0,01-0,10% Schwefel und 0,20-0,80% Kalium enthält.

3. Langzeitwirkendes, allgemein einsetzbares wasserabweisendes Mittel gemäß Anspruch 2, das des Weiteren Magnesium, Silicium, Chlor, Calcium, Eisen, Zink und Rubidium umfasst.

## Revendications

1. Hydrofuge à usage général et de longue durée, **caractérisé en ce qu'**il contient trois ingrédients principaux, soit une émulsion d'oxyde de zirconium, une paraffine liquide, et une émulsion de résine d'acétate de polyvinyle, mélangées en séquence dans un rapport de 1/4/1 à ± 20 % de chaque ingrédient.

2. Hydrofuge à usage général et de longue durée selon la revendication 1, lequel, étant soumis à une analyse aux rayons X fluorescents dans un état sec et ensuite calciné, s'avère contenir au moins 0,005 à 0,030 % de sodium, 0,003 à 0,015 % d'aluminium, 0,001 à 0,010 % de phosphore, 0,01 à 0,10 % de soufre, et 0,20 à 0,80 % de potassium.

3. Hydrofuge à usage général et de longue durée selon la revendication 2, lequel comprend en outre du magnésium, du silicium, du chlore, du calcium, du fer, du zinc, et du rubidium.
